# EUROPÄISCHE PATENTSCHRIFT

(11) **EP 3 578 041 B1**
(45) Veröffentlichungstag und Bekanntmachung des Hinweises auf die Patenterteilung: **04.08.2021**
(21) Anmeldenummer: 18176891.2
(22) Anmeldetag: 10.06.2018
(51) Int. Cl.: A01K 51/00

(54) **DISPENSERVORRICHTUNG UND ENSPRECHENDE VERFAHREN UND VERWENDUNG ZUR MILBENBEKÄMPFUNG IN BIENENBEUTEN**
DISPENSER DEVICE AND CORRESPONDING METHOD AND USE FOR MITE CONTROL IN BEEHIVES
DISPOSITIF DE DISTRIBUTION ET PROCEDE ET UTILISATION CORRESPONDANTS POUR LA LUTTE CONTRE LES ACARIENS DANS LES RUCHES

(43) Veröffentlichungstag der Anmeldung: 11.12.2019
(73) Patentinhaber: WaldWieseHolz GmbH, 13357 Berlin (DE)
(72) Erfinder: EHWALD, Rudolf Johannes, 15374 Müncheberg (Brandenburg) (DE); ADLEFF, Helge, 10407 Berlin (DE)
(74) Vertreter: Zimmermann & Partner Patentanwälte mbB

(56) Entgegenhaltungen:
- DE-A1-102011 000 223
- US-A1- 2018 116 198

## Beschreibung

### Beschreibung

Die Behandlung von Bienenbeuten mit Ameisensäuredampf hat u.a. in Europa, den USA und Kanada wirtschaftliche Bedeutung. Sie ist ein Bestandteil, der für das Überleben der Bienenvölker erforderlichen Bekämpfung der parasitischen Milbe *Varroa destructor* und wird unter Verwendung verschiedener Dispenser für Ameisensäuredampf in Deutschland vor allem im Spätsommer und Herbst durchgeführt und häufig mit einer Oxalsäure-Behandlung im Winter kombiniert. Bei der Ameisensäuredampfbehandlung kommt es vor allem darauf an, den Milbenbefall der Larven in den Brutwaben zu reduzieren, in welche die Ameisensäure nur in der Form ihres Dampfes eindringt.

Die sogenannte Kurzzeitbehandlung mit Ameisensäuredampf, bei der beispielsweise ein mit Ameisensäure getränktes Schwammtuch in einen Hohlraum über oder unter den Waben der Bienenbeute eingesetzt wird, kann als Schock-Therapie bezeichnet werden, weil anfangs kurzzeitig hohe Ameisensäuredampfkonzentrationen in der Beute auftreten (Liebig 2011). Eine besser regulierte Dampfabgabe wird mit Hilfe der Krämerplatte erreicht, bei welcher die Ameisensäure an eine Weichfaserplatte gebunden ist und die Verdunstungsfläche durch die Zahl und Größe von Verdunstungsfenstern in einer umhüllenden Plastikfolie an den Bedarf angepasst werden kann. Da der Quellungsgrad der Faserplatte den Dampfdruck und die Permeabilität der Ameisensäure beeinflusst, nimmt auch bei diesem Dispenser die Verdunstungsrate mit der Zeit deutlich ab. Eine starke Anfangskonzentration des Ameisensäuredampfes wird auch mit den Mite Away Quick Strips (MAQS), entsprechend der Patentanmeldung US 2008/0280528A1 erreicht, welche in einen Hohlraum unter dem Deckel der Bienenbeute platziert werden. Der MAQS - Dispenser bindet die Ameisensäure an ein Gelkissen mit einer dochtartigen Verdunstungsfläche, die durch Verdunstungsfenster in einer Hülle begrenzt werden. Er verbindet eine kurzzeitige Schockwirkung mit einer länger anhaltenden und allmählich abnehmenden Abgabe von Ameisensäuredampf und besitzt neben dem Vorteil einer relativ hohen Wirksamkeit gegen Milben anwendungstechnische Vorteile (Aumeier et al. 2011). Für die Langzeitbehandlung wurden u.a. der Nassenheider-Dispenser (EP 0 959 674 B1), die Anwendung der Ameisensäure mit Medizinflasche und der Liebig-Dispenser entwickelt (Liebig 2011). Bei der Langzeitbehandlung wird das Ameisensäurepräparat aus einem Vorratsbehälter in einen Docht überführt und die Verdunstung erfolgt an einer kapillar saugenden Verdunstungsfläche, z.B. Schwammtuch oder Filterpapier, wobei sich die Verdunstungsfläche allmählich bis auf einen bestimmten Wert vergrößert. Hierdurch steigt die Ameisensäuredampf-konzentration in der Beute allmählich an, und die verabreichte Dosis verteilt sich auf einen längeren Zeitraum. So kann besser verhindert werden, dass die Bienen, insbesondere die Königinnen, einer toxischen Dosis ausgesetzt werden. In US 2018/0116198 A1 werden Zusammensetzungen, Vorrichtungen und Verfahren zur Bekämpfung von Schädlingen mittels Dampfaktivität beschrieben. Die Vorrichtung weist ein mit der Zusammensetzung imprägniertes Substrat, ein undurchlässiges Gehäuse mit einer oder mehrere Öffnungen zum Freisetzen von Dämpfen aus dem Substrat auf und hat zusätzlich einen entfernbaren Abziehstreifen aus flexiblem dampfundurchlässigen Folienmaterial, um ein steuerbares Öffnen der Öffnungen zum Freisetzen der Dämpfe durch einen Benutzer zu ermöglichen. Ruzicka beschreibt in US 6,837,770 B2 einen Dispenser in Form einer Platte mit einem Kern, bestehend aus offenporigem ameisensäureresistenten organischen Schaumstoff, beispielsweise aus Phenolharzschaum. Der noch trockene Kern ist zunächst von einer flüssigkeitsundurchlässigen Folie umhüllt. Zur Füllung des Dispensers mit dem Ameisensäurepräparat wird die umhüllte Platte in zwei Hälften zerschnitten und der Kern der Hälften kapillar mit dem flüssigen Ameisensäurepräparat gesättigt. Als Verdunstungsfenster wirkt die Schnittfläche. Ein Vorteil dieses Dispensers besteht u.a. in seiner bequemen Anwendung und der hohen volumenbezogenen Kapazität des Kerns für das Ameisensäurepräparat. Bei den meisten bisher eingesetzten Ameisensäuredispensoren wird als Dampf-Verteilungsraum der Raum einer Leerzarge eingesetzt. Bei dem Nassenheider-Dispenser in der vertikalen Anwendungsform sowie beim Dispenser nach Burmeister (Charriere J -D, 1998) ist der Verteilungsraum ein leerer Wabenrahmen am Rande des Brutnestes. Der Dispenser nach US 6,837,770 B2 wird in vertikaler Position in einem Raum zwischen der Beutewand und dem Außenrahmen befestigt, wobei die Verdunstungsfläche sich unten befindet. Bei der Anwendung der bisher genannten Ameisensäure- Dispenser grenzt die Verdunstungsfläche an einen Verteilungsraum für den Ameisensäuredampf, dessen Luft bei kühler Witterung weit unter der Brutnest-Temperatur liegt und eine hohe relative Luftfeuchte besitzt. Die Ameisensäuredampf-Behandlung der Völker wird meist im Spätsommer direkt nach der Honigernte und ein zweites Mal nach der Auffütterung vorgenommen. Zu den genannten Zeiten (in Mitteleuropa Ende Juli bis Anfang September) ist der Befall mit der parasitischen Milbe besonders stark. Häufige Witterungsextreme, vor allem das Auftreten kalter Nächte, erschweren die Planung und Durchführung der Spätsommer- und Herbstbehandlung mit Ameisensäuredampf. Im Behandlungszeitraum liegt die Temperatur der Dispenser oft unter 15 °C. Daher kann bei den bisher bekannten Dispensern die Absorption von Wasserdampf an den Verdunstungsflächen nicht ausgeschlossen werden. Die absorptionsbedingte Verdünnung der Ameisensäure an der Verdunstungsfläche reduziert auf Grund der besonderen azeotropen Eigenschaften von Ameisensäure-Wassermischungen die relative Flüchtigkeit der Ameisensäure sehr viel stärker als nach dem Raoultschen Gesetz zu erwarten wäre. Aus der Untersuchung von Johnsen (1954) geht hervor, dass nur bei einer relativen Luftfeuchtigkeit unter 60 % an der Verdunstungsfläche ein Wassergehalt des Ameisensäurepräparats aufrechterhalten wird, bei dem beide Komponenten des flüssigen Präparats eine stationäre relative Flüchtigkeit annehmen und damit, dem siedenden flüssigen Azeotrop vergleichbar, den Verdampfungsort mit annähernd gleicher Relativgeschwindigkeit verlassen. Die kältebedingte Absorption von Wasserdampf an den Verdunstungsflächen führt zu einer Verdünnung der Ameisensäure und einer damit verbundenen sehr starken Abnahme ihrer relativen Flüchtigkeit. Kühle Witterung bedingt daher Unterdosierungen mit zu geringem Milben-Fall. Es wurde versucht, das Problem der geringen Verdunstungsrate des Ameisensäurepräparats bei geringen Außentemperaturen durch eine Heizung, beispielsweise in Form eines Grablichtes zu lösen. Amrine J und Noel R (2006) beschreiben einen Ameisensäuredispenser, bei dem die Verdunstungsfläche an einen Luftraum über den Waben grenzt und den Waben zugewandt ist, so dass die Verdunstungsfläche durch die im Brutnest erwärmte Luft angeströmt wird. Dieser Dispenser besitzt einen Holzrahmen zum Aufsetzen auf die Zarge mit den Wabenrahmen sowie einen in diesen Rahmen einzusetzenden Holz-Innenrahmen, der oben, bis auf einen engen Bienenweg, mit einem Aluminiumblech oder einer Kunststoffplatte abgedeckt ist. Unter der Abdeckung ist mit Hilfe eines Gitters ein saugfähiges Gewebe zur kapillaren Bindung des Ameisensäurepräparats befestigt. Das feuchte Gewebe wird durch die aufsteigende warme Luft angeströmt und gibt Ameisensäuredampf in den als Aktivierungshohlraum bezeichneten Dampf-Verteilungsraum über den Waben ab, der vom Innerahmen begrenzt wird. Auch bei diesem Vorgehen ist es unvermeidbar, dass sich kühles Außenklima auf Grund der Wärmeleitung stark auf die Verdunstungsrate und damit negativ auf die Effizienz der Ameisensäurebehandlung auswirkt. Eine ausreichend hohe Verdunstungsgeschwindigkeit bei kaltem Wetter wird bei Verwendung der Medizinflasche in Verbindung mit einer Weichfaserplatte erreicht (Liebig 2011). Da die auf die Wabenrahmen des Brutnestes aufgelegte Platte direkten Kontakt mit dem Brutnest hat, gibt sie auf ihrer durch das Brutnest erwärmten Unterseite den Ameisensäuredampf direkt in die von ihr überdachten Wabengassen ab. Auch bei diesem Verfahren ist bei niedrigen Außentemperaturen ein starkes Temperaturgefälle von der Platten-Unterseite zur Oberseite und eine starke Witterungsabhängigkeit unvermeidbar. Wird es bei wärmerem Außenklima eingesetzt, besteht die Gefahr der Überdosierung mit hoher Toxizität für die Bienen und dem Verlust der Königin. Bei allen bekannten Ameisensäuredispensoren ist die flächenbezogene Verdunstungsrate in hohem Maße vom Außenklima abhängig. Bisher bekannte Ameisensäure-Dispenser zur Milbenbekämpfung in Bienenbeuten exponieren die mit dem flüssigen Ameisensäurepräparat befeuchteten Verdunstungsflächen bzw. die in einer gasdichten Hülle gebildeten Verdunstungsfenster für die Dampfabgabe ganz oder teilweise in einen weiten Luftraum außerhalb des Brutnestes, woraus die Abhängigkeit der Dampfabgaberate vom Außenklima resultiert. Vermutlich steht die übliche Erweiterung des Beutevolumens oder das Einsetzen eines leeren Rahmens zur Behandlung mit Ameisensäuredampf im Zusammenhang mit der naheliegenden Vorstellung, dass nur so eine wirksame konvektive Verteilung des Dampfes in der Beuteluft erreichbar sei.

Die bisher genannten Disperser sind bei fahrlässigem Einsatz gesundheitsgefährdend, weil entweder mit der offenen Säure oder mit Oberflächen des Dispensers hantiert werden muss, die mit dem Ameisensäurepräparat befeuchtet sind. Die notwendigen Vorsichtsmaßnahmen und die erforderliche Schutzbekleidung komplizieren die Durchführung der Ameisensäure-Behandlung. Aus diesem Grunde und zur Kontrolle der Verdunstungsrate wurde durch Daniels et al. (1999) die Verwendung eines Dispensers mit membrankontrollierter Verdunstung unter Verwendung einer dampfdurchlässigen und flüssigkeitsundurchlässigen Latexmembran vorgeschlagen. Auch in der Patentanmeldung DE102011000223A1 wird zum Schutz vor der flüssigen Ameisensäure der Einsatz einer für Gase wie Ameisensäuredampf und Wasserdampf durchlässigen, für flüssiges Wasser und Ameisensäure undurchlässigen Membran beschrieben. Diese Membran wird vor dem Einsatz des Dispensers mit einer dampfdichten Folie abgedeckt. Allerdings ist das Problem des möglichen Hautkontaktes mit Ameisensäure noch nicht dadurch gelöst, dass die gasdurchlässige und flüssigkeitsundurchlässige Membran von einer gasundurchlässigen Schicht bedeckt wird. Auch in diesem Fall kann sich die Außenseite der gasdurchlässigen Flüssigkeitsbarriere kondensationsbedingt mit dem Ameisensäurepräparat befeuchten.

Die Aufgabe der Erfindung besteht in der Bereitstellung eines anwenderfreundlichen Dispensers für Ameisensäuredampf in Bienenbeuten, der eine vom Außenklima weitgehend unabhängige Verdunstungsrate ohne zusätzliche Heizung unter Vermeidung der oben genannten Nachteile ermöglicht. Eine weitere Aufgabe besteht in der Bereitstellung eines bequemen, kostengünstigen und risikofreien Verfahrens der Ameisensäurebehandlung von Bienenbeuten. Die Aufgabe wird erfindungsgemäß durch einen Dispenser für Ameisensäuredampf nach einem der Ansprüche 1 bis 5 in Verbindung mit einem Verfahren zur Behandlung einer Bienenbeute zur Milbenbekämpfung nach einem der Ansprüche 6-13 und Verwendungsansprüche 14-15 gelöst.

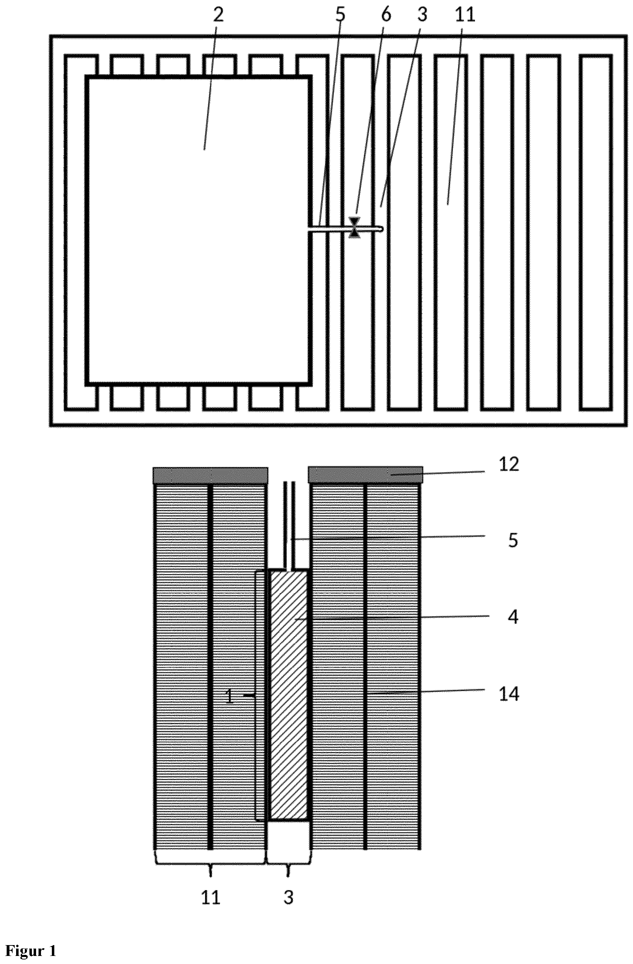

Wesentliche Merkmale des erfindungsgemäßen Dispensers sind aus Figur 1 ersichtlich. Er enthält zwei miteinander verbundene Kompartimente zum Einbringen eines flüssigen Ameisensäurepräparats, von denen eines nach außen ganz oder teilweise durch die Verdunstungsfläche begrenzt wird und im Folgenden als Verdunstungsbehälter 1 bezeichnet wird, und ein weiteres Kompartiment, das gasdicht nach außen abgeschlossen ist und im Folgenden als Vorratsbehälter 2 bezeichnet wird. Die Abmessungen des Verdunstungsbehälters ermöglichen es, ihn ohne Erweiterung des Beutevolumens und ohne den Einsatz eines leeren Rahmens in einem an die Brutnestwaben und Wabengassen 3 des Brutnestes direkt angrenzenden oder in einer Wabengasse befindlichen Luftraum zu platzieren und dabei die Verdunstungsfläche 4 in den Luftraum einer Wabengasse oder in einen in den Verdunstungsbehälter integrierten durch das Brutnest führenden Luftströmungsweg zu exponieren. Die Verdunstungsfläche wird durch eine für das flüssige Ameisensäurepräparat undurchlässige, für seinen Dampf und andere Gase jedoch hochdurchlässige Schicht begrenzt, die als gasdurchlässige Flüssigkeitsbarriere bezeichnet wird. Für die Begrenzung der Verdunstungsfläche ist eine gasdurchlässige Flüssigkeitsbarriere in Form einer hochporösen Flächenmembran oder tubulären Membran aus einem hydrophoben Material, beispielsweise einem Polyolefin geeignet. Gasdurchlässige Flüssigkeitsbarrieren mit den genannten Eigenschaften finden zahlreiche Anwendungen, beispielsweise zur Herstellung wasserdichter gasdurchlässiger Bekleidung, passiver Ventile, poröser Abstandhalter und Vorrichtungen für den Gasaustausch mit Flüssigkeiten wie künstlichen Lungen und dergleichen. Sie sind beispielsweise als industrielle Massenprodukte bestehend aus Polypropylen mit den Markennamen Accurel®, Celgard®, Oxyphan® und Treo-Pore® verfügbar. Die gasdurchlässige Flüssigkeitsbarriere für den erfindungsgemäßen Einsatz besteht wie die genannten porösen Polypropylen-Membranen aus hydrophobem Material. Sie besitzt durchgehende gasgefüllte Poren mit einer Weite zwischen 10 nm und 1000 nm; das Porenvolumen überschreitet 30 Volumenprozent, die Membranstärke liegt unter 200 µm. Die genannten Merkmale gewährleisten, dass die Verdunstungsrate durch die gasdurchlässige Flüssigkeitsbarriere nicht behindert wird. Membranen mit den genannten Eigenschaften halten einem Staudruck von Wasser und Ameisensäure bis zu mehreren bar stand. Hierdurch kann das Auslaufen des Ameisensäurepräparats aus dem Verdunstungsbehälter sicher vermieden werden, wenn der Vorratsbehälter über dem Verdunstungsbehälter positioniert ist und das flüssige Ameisensäurepräparat zum Ersatz der Verdunstungsmenge aus dem Vorratsbehälter in den Verdunstungsbehälter strömt. Aus den genannten Werten für die Porosität, die Membrandicke und die Porenweite ergibt sich eine hohe Permeabilität für Gase und Dämpfe (> 2 mm s⁻¹) welche bei den in einer Bienenbeute realisierten Luftströmungsgeschwindigkeiten die flächenbezogene Verdunstungsrate nicht limitiert. Eine gasdurchlässige Flüssigkeitsbarriere mit den genannten Eigenschaften kann die Verdunstungsgeschwindigkeit nicht limitieren, weil ihre Dampf-Permeabilität diejenige der laminar strömenden äußeren Luftschichten bei weitem übersteigt. Wegen der Staudruckresistenz dieser Membranen vereinfacht sich die ständige Zufuhr des Ameisensäurepräparats zur Verdunstungsfläche; ein Docht wird überflüssig. Die Verdunstung ist wegen der extrem hohen Gaspermeabilität der verwendeten gasdurchlässigen Flüssigkeitsbarriere im Gegensatz zu dem von Daniels et al. (1999) beschriebenen Verfahren mit einer LatexMembran nicht membrankontrolliert; hierdurch werden bei der Temperatur des Brutnestes extrem hohe flächenbezogene Verdunstungsraten möglich, wie weiter unten gezeigt wird. Auf Grund der hohen flächenbezogenen Verdunstungsrate an einer unter Staudruck stehenden gasdurchlässigen Flüssigkeitsbarriere der beschriebenen Art ergibt sich die Möglichkeit für einen neuen Typ des Ameisensäure-Dispensers mit einem kleinen Verdunstungsbehälter, welcher in enge wärmeleitende Beziehung zu den Brutnestwaben gebracht werden kann, ohne die Zahl der Wabenrahmen zu verändern oder die Beute räumlich zu erweitern. Das Problem der begrenzten Volumenkapazität eines erfindungsgemäßen Verdunstungsbehälters wird dadurch gelöst, dass zur Aufnahme der Behandlungsdosis ein mit dem engen Verdunstungsbehälter verbundener Vorratsbehälter eingesetzt wird. Er kann in der Beute außerhalb des Brutnestes oder sogar außerhalb der Beute platziert werden; er muss nicht in enger wärmeleitender Beziehung zu den Brutwaben stehen. Die Aufteilung der flüssigen Behandlungsdosis in zwei Kompartimente, einen großlumigen Vorratsbehälter und einen kleinen Verdunstungsbehälter, ermöglicht das Einbringen der Verdunstungsfläche in relativ enge Lufträume, in welchen die Luft durch das Brutnest oder über das Brutnest geleitet wird. Während des Einsatzes des Dispensers steht der Verdunstungsbehälter in direktem Kontakt mit den Waben oder er befindet sich in einer Wabengasse oder er liegt auf den Oberträgern der Wabenrahmen. In allen Fällen steht der Verdunstungsbehälter in einer engen wärmeleitenden Verbindung mit den Brutnestwaben, so dass seine Temperatur in stärkerem Maße durch die Brutnest-Temperatur als durch die Außentemperatur bestimmt wird. Im Unterschied zu bekannten Verfahren der Behandlung einer Beute mit Ameisensäuredampf wird bei dem erfindungsgemäßen Verfahren auf einen weiten Luftraum zur Verteilung des Ameisensäuredampfes in der Beute, dessen Temperatur deutlich unter der Temperatur der Brutnestwaben liegt, verzichtet. Hierdurch wir die Kondensation von Wasser an der Verdunstungsfläche ausgeschlossen.

Das erfindungsgemäße Verfahren zur Behandlung einer Bienenbeute zur Milbenbekämpfung umfasst das Platzieren eines Verdunstungsbehälters in der Beute in Verbindung mit dem Exponieren seiner Verdunstungsfläche in eine Wabengasse einer normalen Weite bis 12 mm, einen ebenso engen Raum zwischen den Brutnestwabenrahmen und dem Beutedach bzw. einer weiteren Zarge oder in einen in den Verdunstungsbehälter integrierten Luftströmungsweg, der durch das Brutnest führt. Das Platzieren des Verdunstungsbehälters in einen an das Brutnest angrenzenden Luftraum ermöglicht die Abgabe des Ameisensäuredampfes an die durch die Bienenaktivität thermisch oder mechanisch bewegte Luft, die durch ein hohes Wasserdampfsättigungsdefizit ausgezeichnet ist. Eine effektive Wärmeleitung von den Brutnestwaben, deren Temperatur ca. 35 °C beträgt, zum Verdunstungsbehälter bedingt einen hohen und annähernd konstanten Dampfdruck der Ameisensäure an der Verdunstungsfläche. Die auf einen Wert von etwa 40 % durch die Bienen einregulierte relative Luftfeuchtigkeit liegt unter der relativen Luftfeuchtigkeit einer 60 %igen Lösung von Ameisensäure in Wasser, so dass die oberflächliche kondensationsbedingte Verdünnung der Ameisensäure vermieden wird. So wird eine Verdunstungsrate möglich, die relativ unabhängig vom Außenklima ist. Diese Rate wird im Wesentlichen von der Luftströmung nahe der Verdunstungsfläche und deren Geometrie bestimmt.

Beispielsweise wird der Verdunstungsbehälter von oben in eine Wabengasse des Brutnestes eingehängt und durch einen verschließbaren Flüssigkeitsleiter mit einem Vorratsbehälter verbunden, der als flächig ausgedehnter Behälter entsprechend der Figur 1 auf die Oberträger der Wabenrahmen gelegt wird. Soll der Stand des Verbrauches sichtbar gemacht werden, kann der Vorratsbehälter auch außerhalb der Beute platziert werden, wobei beispielsweise die Verbindungsleitung durch die Beutewand oder ein Flugloch geführt wird.

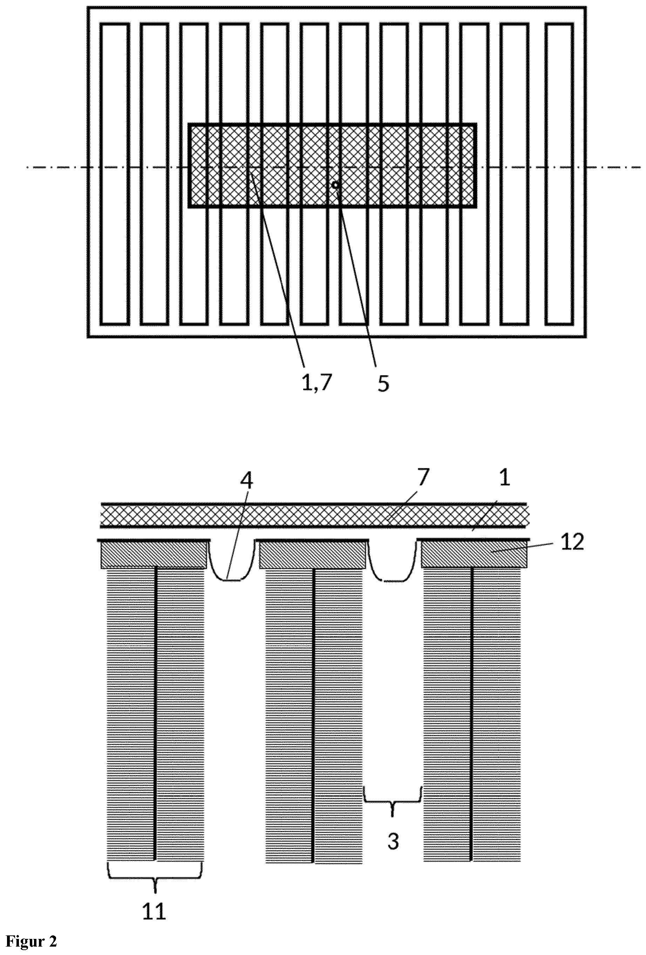

Erfindungsgemäß kann der Verdunstungsbehälter auf die Wabenrahmen über dem Brutnest aufgelegt werden, wobei die Verdunstungsfläche an den Luftraum mehrerer Wabengassen grenzt, wie in Figur 2 schematisch dargestellt ist. Hierdurch wird der Dampf von oben gleichzeitig in mehrere Wabengassen verteilt. Bei diesem Verfahren ist das Abdecken des Verdunstungsbehälters durch eine wärmeisolierende Schicht vorteilhaft für Temperaturkonstanz an der Verdunstungsfläche bei kühlem Außenklima.

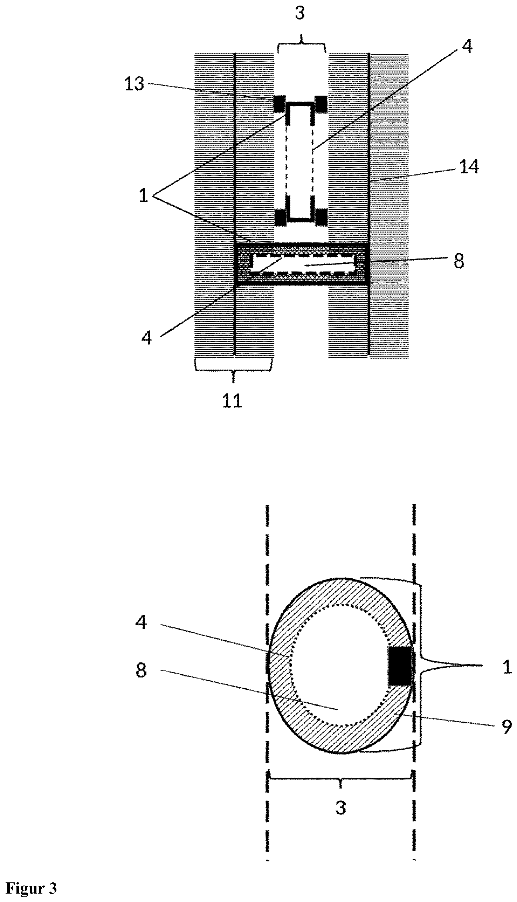

Der Verdunstungsbehälter kann in der Wabengasse entsprechend Figur 3, oben, oder einem anderen Raum zwischen zwei Wabenrahmen platziert werden. Er grenzt auf beiden Seiten der Wabengasse an die Waben, wie in Figur 3 in der Mitte dargestellt wurde. Im letzteren Fall wird der Verdunstungsbehälter beispielsweise beim Einhängen der noch leeren Wabenrahmen in seiner Position befestigt und das Einleiten der Behandlungsdosis in den Verdunstungsbehälter erfolgt nach dem Bau der Brutwaben. Dabei wird der Verdunstungsbehälter so platziert, dass er während der Behandlung von Brutnestwaben umgeben ist und seine Verdunstungsfläche an den integrierten Luftströmungskanal grenzt. Der Verdunstungsbehälter kann so gestaltet werden, dass der Luftströmungskanal von einer flexiblen Innenwand, in welche die gasdurchlässige Flüssigkeitsbarriere integriert ist, einem elastischen Siebgewebe 9 und einer flexiblen flüssigkeitsdichten Außenwand umgeben ist, wie in Figur 3, unten, dargestellt. Hierdurch kann der Verdunstungsbehälter leicht in die Wabengasse eingeführt werden, wo er elastisch fixiert wird. Die Integration des Luftströmungsweges in den Verdunstungsbehälter macht es möglich, das mit dem Ameisensäuredampf beladene Gas thermisch nach oben zu leiten und in der Beuteluft über den Waben zu verteilen, ohne dass die Gefahr einer bienentoxischen lokalen Ameisensäuredampfkonzentration besteht. Bei den in den Figuren 1 bis 3 dargestellten Ausführungsformen des Verdunstungsbehälters besteht wärmeleitender Kontakt mit den die Wabengasse begrenzenden Brutwaben.

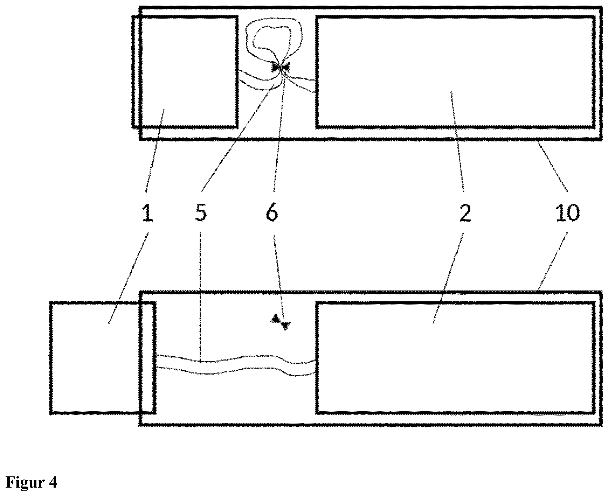

Ist die Verbindungsleitung zwischen dem Vorratsbehälter und dem Verdunstungsbehälter verschließbar, kann die Behandlungsdosis des Ameisensäurepräparates zunächst im dampfdichten Vorratsbehälter eingeschlossen werden. Hierdurch besteht die Möglichkeit, dass der Imker einen vorgefertigten bereits mit der Behandlungsdosis gefüllten Dispenser gefahrlos einsetzt. Eine vorteilhafte Möglichkeit hierzu ist in Figur 4 schematisch dargestellt. Der bereits gefüllte, stapelbare Dispenser ist vor der Öffnung der Verbindungsleitung für die Lagerung und den Vertrieb geeignet. Bei der Entnahme des Verdunstungsbehälters aus der Verpackung 10 öffnet sich die Verbindungsleitung indem sie aus der Klemme 6 gezogen wird und das flüssige Ameisensäurepräparat kann in den Verdunstungsbehälter überführt werden.

Überraschend und unerwartet zeigte sich, dass die für eine hohe Milbenmortalität empfohlene Ameisensäuredampf-Abgaberate von etwa 10 g pro Tag bereits mit einer Verdunstungsfläche von 10 cm² erreicht wird, wenn Prototypen des erfindungsgemäßen Dispensers bei einer Temperatur von 35 °C in langsam bewegter trockener Luft mit einer Ameisensäurekonzentration von 60 % eingesetzt werden. Die flächenabhängige Verdunstungsrate erreichte ähnlich hohe Werte und lag weit über der flächenabhängigen Verdunstungsrate bisher bekannter Dispenser, als die in Figur 1 unten schematisch dargestellten Prototypen des Verdunstungsbehälters während des Spätsommers in die Wabengasse einer Bienenbeute eingeführt wurden. Hierdurch wird gezeigt, dass ein weiter Dampf-Verteilungsraum außerhalb des Wabenraums zur Vermeidung der Dampfsättigung an der Verdunstungsfläche nicht erforderlich ist. Die Erklärung hierfür könnte in einer unerwartet hohen Strömungsgeschwindigkeit der Luft durch das Brutnest bestehen.

### Ausführungsbeispiel

Aus Polypropylen gefertigte Verdunstungsbehälter der in Figur 3, oben, dargestellten Bauart mit einer Verdunstungsfläche von 9 cm², deren Verdunstungsfenster durch eine gasdurchlässige Flüssigkeitsbarriere in Form der 25 µm dicken Treo-Pore®-Membran PDA 25 verschlossen waren, wurden mit einem Silikonschlauch und einem Vorratsgefäß in Form einer graduierten 25 ml-Pipette verbunden. Die Verdunstungsbehälter wurden in einen geheizten ventilierten Luftraum mit einer Temperatur von 35 °C und ständiger Frischluftzuführung eingehängt. In den Pipetten wurde die stündliche Verdunstungsrate einer 60 %igen Ameisensäure durch Ablesen des Flüssigkeitsvolumens ermittelt. Die auf die Verdunstungsfläche bezogene Verdunstungsleistung betrug 52 bis 62 mm³ cm⁻² h⁻¹. Somit wurde eine tägliche Verdunstungsleistung von über 10 ml pro Tag bereits bei einer Verdunstungsfläche von unter 10 cm² erreicht. Der beschriebene Ameisensäuredispenser wurde im Spätsommer in mehreren aus zwei Zargen bestehenden Bienenbeuten getestet, wobei ein Verbindungsschlauch durch die Beutewand geführt wurde. Die auf die Fläche bezogene Verdunstungsleistung betrug 21 bis 25 mm³ cm⁻² h⁻¹. Damit wurde die für eine wirksame Behandlung empfohlene tägliche Abgaberate von 6 bis 10 cm³ mit einer Verdunstungsfläche von nur 15 cm² erreicht.

### Beschreibung der Figuren

Figur 1 zeigt schematisch einen Dispenser, dessen Verdunstungsbehälter 1 (unten) mit einem Vorratsbehälter 2 (oben) verbunden ist. Der Verdunstungsbehälter befindet sich in der Wabengasse 3, in welche er die von der gasdurchlässigen Flüssigkeitsbarriere begrenzte Verdunstungsfläche 4 exponiert. Der Verdunstungsbehälter ist durch eine Verbindungsleitung 5 mit dem Vorratsbehälter, einem flachen Behälter mit einem Fassungsvermögen von etwa 120 cm³ und einer Grundfläche von etwa 200 cm², verbunden. Die gesamte Behandlungsdosis des flüssigen Ameisensäurepräparats befindet sich vor der Behandlung in dem gasdicht verschlossenen Vorratsbehälter. Um die Ameisensäuredampf-Behandlung zu starten wird durch Öffnen der Klemme 6 das flüssige Ameisensäurepräparat in den Verdunstungsbehälter geleitet.

Figur 2 zeigt schematisch einen Verdunstungsbehälter, der auf die Wabenrahmen 11 aufgelegt wird und von einer wärmeisolierenden Schicht 7 bedeckt ist.
Oben: Aufsicht auf die Wabenrahmen, die Wabengassen und den Verdunstungsbehälter. Die von der gasdurchlässigen Flüssigkeitsbarriere begrenzte Verdunstungsfläche liegt den Oberträgern 12 der Wabenrahmen auf und ist in den Luftraum der Wabengassen des Brutnestes exponiert. Unten: Ausschnitt aus einem Schnitt durch den Verdunstungsbehälter senkrecht zum Verlauf der Wabenrahmen.

Figur 3 zeigt in schematischer Darstellung einem Schnitt durch zwei Wabenrahmen mit Verdunstungsbehältern mit unterschiedlichen Positionen der Verdunstungsflächen, die von einer gasdurchlässigen Flüssigkeitsbarriere begrenzt sind. Oben: Der Verdunstungsbehälter wurde zur Behandlung der Bienenbeute in die Wabengasse eingesetzt und exponiert zwei Verdunstungsflächen in die Wabengasse. Abstandshalter 13 sichern einen definierten Luftströmungsweg sowie eine gute Wärmeleitung und verhindern den Kontakt der Verdunstungsfenster mit den Waben. Mitte: Der Verdunstungsbehälter wurde vor dem Bau der Waben in den Abstand zwischen den Mittelwänden 14 zweier Wabenrahmen eingesetzt. Er grenzt während des Behandlungszeitraums an die Waben beider Rahmen und umhüllt einen Lufströmungsweg 8 durch das Brutnest, der von der Wabengasse getrennt ist. Unten: Der Verdunstungsbehälter besitzt einen integrierten Luftströmungsweg, eine für den Ameisensäuredampf undurchlässige biegsame Außenwand und eine biegsame Innenwand, in welche die Verdunstungsfläche integriert ist. In der Position der Verdunstungsfläche wird die Innenwand durch eine gasdurchlässige Flüssigkeitsbarriere gebildet. Der Verdunstungsbehälter enthält ein elastisches Siebgewebe 9 aus Polystyrol zur Gewährleistung des Abstandes zwischen Außen- und Innenwand und zur Gewährleistung der Elastizität.

Figur 4 zeigt in schematischer Darstellung einen Längsschnitt durch einen erfindungsgemäßen Dispenser mit einer Klemmvorrichtung, die sich beim Herausnehmen des Verdunstungsbehälters aus der Verpackung 10 öffnet. Oben: Zur Aufbewahrung des Dispensers vor seiner Verwendung ist die Verbindungsleitung 5 zwischen dem Vorratsbehälter 2 und dem Verdunstungsbehälter 1 mit einer Klemme 6 dicht abgeklemmt. Das flüssige Ameisensäurepräparat befindet sich ausschließlich im Vorratsbehälter und dem Teil der Verbindungsleitung, der zwischen Klemme und Vorratsbehälter liegt. Die Klemme verhindert das Überführen des Ameisensäurepräparates in den Verdunstungsbehälter. Unten: Durch das Herausziehen des Verdunstungsbehälters aus der Verpackung wurde die Verbindungsleitung gestreckt und aus der Klemme herausgezogen. Durch die somit geöffnete Verbindungsleitung kann das Ameisensäurepräparat in den Verdunstungsbehälter überführt werden. Durch mechanischen Druck auf die flexible Wand des Vorratsbehälters kann dieser Vorgang unterstützt werden.

### Bezugszeichenliste

- 1: Verdunstungsbehälter
- 2: Vorratsbehälter
- 3: Wabengasse
- 4: Verdunstungsfläche
- 5: Verbindungsleitung
- 6: Klemme
- 7: Wärmeisolierende Schicht
- 8: Luftströmungsweg
- 9: Elastisches Siebgewebe
- 10: Verpackung
- 11: Wabenrahmen
- 12: Oberträger
- 13: Abstandshalter
- 14: Mittelwand

### Verzeichnis der zitierten Nichtpatentliteratur

Amrine J, Noel R (2006): Formic acid fumigator for controlling varroa mites in honey bee hives, International Journal of Acarology, DOI: 10.1080/01647950608684452
Aumeier P, von der Ohe W, Beinert P, Kirchner W (2011): MAQS® mit Bedacht anwenden! ADIZ Die Biene-Imkerfreund 05 2015, p. 12-13
Charriere J-D (1998): Fünf Ameisensäure-dispensoren im Vergleich, www.imkerverband-sgap.ch/up/files/DispenserVergleich_Agro-scope1998.pdf
Daniels RS, Abdulkareem H, Roger R EL, MacKenzie K (1999): Membrane-barrier delivery of formic acid, a chemical used for mite control in honey bees (Apis mellifera). Journal of Apicultural Research 38, 63-69
Johnsen B K (1954): Über den Einfluss von Salz-Zusätzen auf das Phasengleichgewicht wässeriger Ameisensäure, e-collection.library.ethz.ch/eserv/ eth:32505/eth-32505-02.pdf
Liebig G: Einfach imkern - Leitfaden zum Bienenhalten, Verlag Dr. G. Liebig, Emscherstr. 3, Bochum, 3. Aufl. Aichtal 2011

## Patentansprüche

1. Dispenser zur Aufnahme und Verdunstung einer flüssigen Behandlungsdosis eines Ameisensäurepräparates für die Bekämpfung der Varroa-Milben in einer Bienenbeute, umfassend
- eine Verdunstungsfläche (4), die im Behandlungszeitraum an den Luftraum der Wabengassen oder eines im Brutnestbereich befindlichen durch das Brutnest führenden Luftströmungskanals (8) grenzt und vollständig von einer gasdurchlässigen Flüssigkeitsbarriere begrenzt wird, welche unter dem Staudruck der über ihr befindlichen flüssigen Behandlungsdosis das Abtropfen des Ameisensäurepräparats in flüssiger Form verhindert, wobei die gasdurchlässige Flüssigkeitsbarriere eine Flachmembran oder eine tubuläre Membran aus hydrophobem Material, mit einem Feststoffanteil unter 70 Volumenprozent, einer Dicke unter 200 µm und durchgehenden und ausschließlich gasgefüllten Hohlräumen einer Weite zwischen 10 nm und 1000 nm ist,
- einen vollständig oder teilweise von der gasdurchlässigen Flüssigkeitsbarriere begrenzten Verdunstungsbehälter (1) mit Abmessungen, welche sein Einbringen in einen von den Brutnestwaben begrenzten Hohlraum oder sein Auflegen auf die Oberträger der Wabenrahmen (11) des Brutnestes ohne Erweiterung der Beute ermöglichen und
- einen mit diesem fluidisch verbundenen, nach außen dampfdicht abgeschlossenen Vorratsbehälter (2) zur Aufnahme der Behandlungsdosis eines flüssigen Ameisensäurepräparates.

2. Dispenser nach Anspruch 1, enthaltend die Behandlungsdosis des flüssigen Ameisensäurepräparates ausschließlich im Vorratsbehälter (2) und ausgestattet mit einer verschließbaren Verbindungsleitung (5) zwischen dem Vorratsbehälter (2) und dem Verdunstungsbehälter (1).

3. Dispenser nach Anspruch 2, mit einer stapelfähigen Verpackung (10) und einer verschlossenen Verbindung (5) zwischen Vorrats- (2) und Verdunstungsbehälter (1), die sich bei der Entnahme des Verdunstungsbehälters (1) aus seiner Verpackung (10) öffnet.

4. Dispenser nach einem der vorstehenden Ansprüche, mit einem Verdunstungsbehälter (1), dessen Abmessungen passend zum Platzieren in einen von Brutnestwaben begrenzten Raum sind und in den ein Luftströmungskanal (8) integriert ist, welcher mindestens teilweise von der gasdurchlässigen Flüssigkeitsbarriere begrenzt wird.

5. Dispenser nach einem der vorstehenden Ansprüche mit einer Verdunstungsfläche (4) unter 30 cm².

6. Verfahren zur Behandlung eines Bienenvolks mit Ameisensäuredampf, **gekennzeichnet durch** Positionieren des Verdunstungsbehälters (1) eines Dispensers nach einem der vorstehenden Ansprüche in einen Luftraum der Beute ohne deren räumliche Erweiterung und ohne Nutzung eines leeren Wabenrahmens (11), wobei der Verdunstungsbehälter (1) in enge wärmeleitende Beziehung zu den Brutnestwaben gebracht und die Verdunstungsfläche (4) unter den Staudruck der Behandlungsdosis des flüssigen Ameisensäurepräparats gesetzt wird.

7. Verfahren nach Anspruch 6, **gekennzeichnet durch** Einsetzen des Verdunstungsbehälters (1) in eine Wabengasse (3) des Brutnestes oder in einen von Brutnestwaben begrenzten Raum.

8. Verfahren nach Anspruch 6, **gekennzeichnet durch** Aufsetzen eines flächig ausgedehnten Verdunstungsbehälters (1) auf Wabenrahmen (11) des Brutnestes in wärmeleitendem Kontakt mit den Oberträgern.

9. Verfahren nach Anspruch 8, bei dem der Verdunstungsbehälter (1) von einer wärmeisolierenden Schicht (7) bedeckt wird und die gasdurchlässige Flüssigkeitsbarriere an die Oberträger (12) der Wabenrahmen (11) des Brutnestes sowie an die Wabengassen (3) zwischen ihnen grenzt.

10. Verfahren nach Anspruch 6, bei dem ein mit dem Verdunstungsbehälter (1) verbundener Vorratsbehälter (2) für die Behandlungsdosis außerhalb der Beute platziert wird.

11. Verfahren nach Anspruch 6, bei dem ein flächig ausgebreiteter, unter den Deckel der Beute oder zwischen zwei Zargen ohne räumliche Erweiterung der Beute passender Vorratsbehälter (2) auf die Wabenrahmen (11) der Beute gelegt wird.

12. Verfahren nach Anspruch 6, bei dem vor dem Bau der Brutwaben ein für die Aufnahme des Verdunstungsbehälters (1) oder des ganzen Dispensers zwischen den Wabenrahmen (11) vorgesehener Raum durch einen Platzhalter oder hohlen Aufnahmekörper ausgefüllt wird oder der Verdunstungsbehälter (1) oder der Dispenser bereits vor dem Bau der Brutwaben im Brutnest platziert wird.

13. Verfahren nach einem der Ansprüche 6 bis 12, wobei der Verdunstungsbehälter (1) in einer engen wärmeleitenden Verbindung mit den Brutnestwaben steht.

14. Verwendung eines Dispensers nach einem der Ansprüche 1 bis 5 zur Milbenbekämpfung in einer Bienenbeute, umfassend:
- Platzieren eines Verdunstungsbehälters (1) in der Bienenbeute; und
- Exponieren seiner Verdunstungsfläche (4) des Verdunstungsbehälters (1) in eine Wabengasse (3) einer normalen Weite bis 12 mm, in einen ebenso engen Raum zwischen den Brutnestwabenrahmen (11) und dem Beutedach bzw. einer weiteren Zarge, oder in einen in den Verdunstungsbehälter (1) integrierten Luftströmungsweg (8), der durch ein Brutnest umfassend Brutnestwaben führt.

15. Verwendung eines Dispensers nach Anspruch 14, wobei der Verdunstungsbehälter (1) in einer engen wärmeleitenden Verbindung mit Brutnestwaben steht.

## Claims

1. Dispenser for receiving and evaporating a liquid treatment dose of a formic acid preparation for the control of Varroa mites in a bee hive comprising
- an evaporation surface (4) which, during the treatment period, adjoins the airspace of the honeycomb alley or an air flow path (8) leading through the brood nest in the brood nest area and which is completely bounded by a gas-permeable liquid barrier which prevents dripping of the formic acid preparation in liquid form under the dynamic pressure of the liquid treatment dose located above it, wherein the gas-permeable liquid barrier is a flat membrane or a tubular membrane of hydrophobic material, with a solid content below 70 volume percent, a thickness below 200 µm and continuous and exclusively gas-filled hollow spaces having a width between 10 nm and 1000 nm,
- an evaporation container (1) which is completely or partially bounded by the gas-permeable liquid barrier and which has dimensions, which allow its insertion into a cavity bounded by the brood nest combs or which allows its placement on the upper beams of the honeycomb frames (11) of the brood nest without the need to expand the hive, and
- a storage container (2) fluidically connected thereto and sealed from the outside in a vapour-tight manner for receiving the treatment dose of a liquid formic acid preparation.

2. Dispenser according to claim 1, containing the treatment dose of the liquid formic acid preparation exclusively in the storage container (2) and equipped with a closable connecting line (5) between the storage container (2) and the evaporation container (1).

3. Dispenser according to claim 2, comprising a stackable package and a closable connection (5) between the storage container (2) and the evaporation container (1), which opens when the evaporation container (1) is removed from its packaging (10).

4. Dispenser according to any of the preceding claims, comprising an evaporation container (1), the dimensions of which are suitable for placing in a space bounded by brood nest combs and in which an air flow path (8) is integrated, which is at least partially bounded by the gas-permeable liquid barrier.

5. Dispenser according to any of the preceding claims having an evaporation surface (4) area of less than 30 cm².

6. Method of treating a bee colony with formic acid vapour, **characterized by** positioning the evaporation container (1) of a dispenser according to any one of the preceding claims into an air space of the hive without expanding the space thereof and without use of an empty honeycomb frame (11), wherein the evaporation container (1) is brought in close heat-conducting relationship with the brood nest combs and the evaporation surface (4) is brought under the dynamic pressure of the treatment dose of the liquid formic acid preparation.

7. Method according to claim 6, **characterized by** inserting the evaporation container (1) in a honeycomb alley (3) of the brood nest or in a space bounded by brood nest combs.

8. Method according to claim 6, **characterized by** placing a 2-dimensionally extended evaporation container (1) onto honeycomb frames (11) of the brood nest in heat-conducting contact with the upper beams.

9. Method according to claim 8, in which the evaporation container (1) is covered by a heat insulating layer (7), and the gas-permeable liquid barrier adjoins the upper beams (12) of the honeycomb frames (11) of the brood nest and the honeycomb alley (3) between them.

10. Method according to claim 6, wherein a storage container (2), connected to the evaporation container (2), for the treatment dose is placed outside the hive.

11. Method according to claim 6, in which a 2-dimensionally extending storage container (2), fitting under the cover of the hive or between two frames without spatial expanding the hive is placed on the honeycomb frames (11) of the hive.

12. Method according to claim 6, in which, prior to the construction of the brood combs, a space provided for receiving the evaporation container (1) or the whole dispenser between the honeycomb frames (11) is filled by a placeholder or a hollow receiving body, or the evaporation container (1) or the dispenser is placed in the brood nest before the brood combs are placed in the brood nest.

13. Method according to any one of claims 6 to 12, wherein the evaporation container (1) is in close heat-conducting connection with the brood nest combs.

14. Use of a dispenser according to any one of claims 1 to 5 for mite control in a bee hive, comprising:
- placing an evaporation container (1) in the hive; and
- exposing the evaporation surface (4) of the evaporation container (1) into a honeycomb alley (3) of normal width up to 12 mm, into an equally narrow space between the brood nest honeycomb frames (11) and the hive roof or another frame, or into an air flow path (8) integrated into the evaporation container (1) and leading through a brood nest comprising brood nest combs.

15. Use of a dispenser according to claim 14, wherein the evaporation container (1) is in close heat-conducting connection with brood nest combs.

## Revendications

1. Distributeur pour la réception et l'évaporation d'une dose thérapeutique liquide d'une préparation d'acide formique pour lutter contre l'acarien varroa dans une ruche d'abeilles, comprenant
- une surface d'évaporation (4) qui pendant la durée du traitement est limitrophe de l'espace aérien des passages entre les cadres ou d'un canal d'écoulement d'air (8) se trouvant dans la zone d'un nid à couvain et menant à travers le nid à couvain, et est entièrement délimitée par une barrière de liquide perméable au gaz, laquelle empêche l'égouttage de la préparation d'acide formique sous une forme liquide sous la pression dynamique de la dose thérapeutique liquide se trouvant au-dessus d'elle, dans lequel la barrière de liquide perméable au gaz est une membrane plate ou une membrane tubulaire dans un matériau hydrophobe, avec une teneur en matières solides inférieure à 70 % en volume, une épaisseur inférieure à 200 µm et des espaces creux en continu et exclusivement remplis de gaz d'une largeur entre 10 nm et 1 000 nm,
- un récipient d'évaporation (1) entièrement ou partiellement délimité par la barrière de liquide perméable au gaz avec des dimensions qui permettent son amenée jusque dans un espace creux délimité par les rayons de nid à couvain ou sa dépose jusque sur les supports supérieurs des cadres de rayon (11) du nid à couvain sans élargissement de la ruche et
- un récipient de stockage (2) relié fluidiquement à celui-ci et fermé de façon étanche à la vapeur vers l'extérieur pour la réception de la dose thérapeutique d'une préparation d'acide formique liquide.

2. Distributeur selon la revendication 1, contenant la dose thérapeutique de la préparation d'acide formique liquide exclusivement dans le récipient de stockage (2) et équipé d'une conduite de liaison (5) pouvant être fermée entre le récipient de stockage (2) et le récipient d'évaporation (1).

3. Distributeur selon la revendication 2, avec un emballage (10) pouvant être empilé et une liaison (5) fermée entre les récipients de stockage (2) et d'évaporation (1) qui s'ouvre lors de l'extraction du récipient d'évaporation (1) hors de son emballage (10).

4. Distributeur selon l'une des revendications précédentes, avec un récipient d'évaporation (1) dont les dimensions sont appropriées pour le placement dans un espace délimité par des rayons de nid à couvain et jusque dans lequel est intégré un canal d'écoulement d'air (8), lequel est délimité au moins partiellement par la barrière de liquide perméable au gaz.

5. Distributeur selon l'une des revendications précédentes avec une surface d'évaporation (4) inférieure à 30 cm².

6. Procédé destiné à traiter une colonie d'abeilles avec une vapeur d'acide formique, **caractérisé par** le positionnement du récipient d'évaporation (1) d'un distributeur selon l'une des revendications précédentes dans un espace aérien de la ruche sans élargissement spatial de celle-ci et sans utilisation d'un cadre de rayon (11) vide, dans lequel le récipient d'évaporation (1) est amené dans une relation thermoconductrice étroite avec les rayons de nid à couvain et la surface d'évaporation (4) est placée sous la pression dynamique de la dose thérapeutique de la préparation d'acide formique liquide.

7. Procédé selon la revendication 6, **caractérisé par** l'introduction du récipient d'évaporation (1) jusque dans un passage entre les cadres (3) du nid à couvain ou jusque dans un espace délimité par des rayons de nid à couvain.

8. Procédé selon la revendication 6, **caractérisé par** la pose d'un récipient d'évaporation (1) étendu à plat sur des cadres de rayon (11) du nid à couvain en contact thermoconducteur avec les supports supérieurs.

9. Procédé selon la revendication 8, dans lequel le récipient d'évaporation (1) est recouvert d'une couche (7) d'isolation thermique et la barrière de liquide perméable au gaz est limitrophe des supports supérieurs (12) des cadres de rayon (11) du nid à couvain ainsi que des passages entre les cadres (3).

10. Procédé selon la revendication 6, dans lequel un récipient de stockage (2) relié au récipient d'évaporation (1) est placé à l'extérieur de la ruche pour la dose thérapeutique.

11. Procédé selon la revendication 6, dans lequel un récipient de stockage (2) étalé à plat et s'adaptant sous le couvercle de la ruche ou entre deux châssis sans élargissement spatial de la ruche est posé sur les cadres de rayon (11) de la ruche.

12. Procédé selon la revendication 6, dans lequel, avant la construction des rayons à couvain, un espace prévu pour la réception du récipient d'évaporation (1) ou du distributeur en entier entre les cadres de rayon (11) est rempli d'un substituant ou d'un corps de réception creux, ou le récipient d'évaporation (1) ou le distributeur est placé dans le nid à couvain déjà avant la construction des rayons à couvain.

13. Procédé selon l'une des revendications 6 à 12, dans lequel le récipient d'évaporation (1) est dans une relation thermoconductrice étroite avec les rayons de nid à couvain.

14. Utilisation d'un distributeur selon l'une des revendications 1 à 5 destiné à lutter contre les acariens dans une ruche d'abeilles, comprenant :
- le placement d'un récipient d'évaporation (1) dans la ruche d'abeilles ; et
- l'exposition de sa surface d'évaporation (4) du récipient d'évaporation (1) jusque dans un passage entre les cadres (3) d'une largeur normale allant jusqu'à 12 mm, jusque dans un espace tout aussi étroit entre les cadres de rayon de nid à couvain (11) et le toit de ruche ou un autre châssis, ou jusque dans un chemin d'écoulement d'air (8) intégré au récipient d'évaporation (1) et qui mène à travers des rayons de nid à couvain comprenant un nid à couvain.

15. Utilisation d'un distributeur selon la revendication 14, dans lequel le récipient d'évaporation (1) est dans une relation thermoconductrice étroite avec des rayons de nid à couvain.
